# EUROPEAN PATENT SPECIFICATION

(11) **EP 3 555 392 B1**
(45) Date of publication and mention of the grant of the patent: **22.06.2022**
(21) Application number: 17832055.2
(22) Date of filing: 13.12.2017
(51) Int. Cl.: E05B 81/00, G07B 15/00

(54) **ARRANGEMENT FOR MANIPULATING A VEHICLE DOOR LOCK REMOTE CONTROL DEVICE**
ANORDNUNG ZUR MANIPULATION DER FERNBEDIENUNGSVORRICHTUNG EINES KRAFTFAHRZEUG-TÜRSCHLOSSES
AGENCEMENT POUR MANIPULER UN DISPOSITIF DE TÉLÉCOMMANDE DE VERROU DE PORTIÈRE DE VÉHICULE

(30) Priority: 13.12.2016 NO 20161977
(43) Date of publication of application: 23.10.2019
(73) Proprietor: Tapcar AS, 0208 Oslo (NO)
(72) Inventor: BRANDENBERGER, Dennis, 2003 Lillestrøm (NO); STRAND-BERGESEN, Børge, 1395 Hvalstad (NO)
(74) Representative: Onsagers AS
(86) International application number: PCT/EP2017/082571
(87) International publication number: WO 2018/108984

(56) References cited:
- EP-A1- 1 808 336
- WO-A1-2017/168341
- DE-A1-102005 059 061

## Description

The present invention relates to an arrangement for manipulating a vehicle door lock remote control device.

A vehicle, such as a car, is usually accessed by means of a wireless remote control device. In general, such a wireless remote control device allows the doors of the vehicle to be unlocked and locked from a location near the vehicle.

Such a remote control device may transmit a radio signal that is coded by a code, which is unique to the vehicle. In this way, it is ensured that the operation of the remote control device results in that the doors of the vehicle actually associated with the remote control is unlocked or locked by the manual operation of this particular remote control device.

This type of remote control device is often designed as a handheld, miniature housing, which accommodates a battery, electronic circuitry including a radio transmitter, and at least one manually operated switch, usually in the form of pushbutton. Usually, two pushbuttons are provided. Pushing the first pushbutton leads to the transmitter transmitting a radio signal coded with an unlocking instruction code. Pushing the second pushbutton leads to the transmitter transmitting a radio signal coded with a locking instruction code.

Often the remote control device is combined with, or made as a part of, a physical key which may be used, e.g., to activate an ignition lock and start the engine of the vehicle. For instance, the handheld housing may serve as a handgrip of the physical key.

This traditional solution is particularly useful for privately owned vehicles, which are typically driven by only one or a few persons, who bring their own key (with associated remote control device) with them.

With modern mobility, in particular in urban areas, traditional private ownership of cars is expected to diminish. Instead, private car share arrangements and various types of car hire arrangements are emerging. When a car or other vehicle is supposed to be used by more than one or just a few users, the traditional approach of a physical key or a physical remote control device as a token for providing access to the vehicle becomes less practical.

As an example, a car share service is usually managed entirely by digital communication, e.g. on the Internet. A participant of the service may reserve and be allocated a car merely by using an application on her/his mobile phone. It would be cumbersome if the user then had to obtain a physical key (or remote control device) in order to get access to the allocated vehicle.

Full digital, key-less access systems are under development in new and future vehicles. Still, there is a need of solutions that makes use of a remote control device of the above-mentioned type, which makes it possible for a larger number of authorized users (for instance, participants in a car share service) to access and use the vehicle, without the need for physical hand-over of a physical key and/or physical remote control device. Avoiding use of the physical key may also have advantages when there is only one user of the car.

One technique which solves this basic problem of the traditional art has been suggested by the disclosure of DE-10 2005 059 061 A1. This publication relates to a method and device that involves locking and unlocking a motor vehicle by a door lock that is remotely controlled by an opening signal that is controlled by a serial key. The opening signal is wirelessly transmitted to the vehicle by the key. The key is kept in a key box that is controlled by an activation unit, which is disposed for unlocking the vehicle by an auxiliary transmitter (operated by radio, infrared, Bluetooth, or mobile communication) to transmit the opening signal and to activate a central locking system in the vehicle. To this end, the key box includes pressing elements, which may be linear motors or electromagnetic actuators, and which are controlled by the auxiliary transmitter.

EP-1 808 336 A1 also discloses an access control device for a motor vehicle. The device has a vehicle key kept inside the vehicle, in such a way that the key is set in operation by a remote control device from outside the vehicle for locking and unlocking of a door lock. The key is movably mounted in a drawer within the vehicle. An actuation unit is moved by a linear drive. The actuation unit is set in operation by the remote control device for operating the vehicle key, which is provided in the drawer of the vehicle.

WO2017/168341A1 discloses a safety device for holding and sharing a key provided with a remote control. The safety device comprises an actuating device that in use operates a push button in the remote control. It is remotely operated by a wireless transmission unit, where the actuating device includes a cam operable to interact with the push button by a relative movement between the remote control and the cam. The actuating device may also open and close a lock that prevents a user from separating a first half shell from a second half shell.

These solutions of the background art still have certain shortcomings or disadvantages, for instance in respect of user-friendliness, robustness, ease of operation, and ease of manufacturing.

### Summary of the invention

The invention provides an improved arrangement for manipulating a door lock remote control device, which remedies or at least alleviates certain drawbacks of arrangements disclosed in the background art.

The invention has been set forth in the appended claims.

### Brief description of the drawings

Figure 1 is a schematic perspective view of a system wherein an arrangement for manipulating a door lock remote control device is used,
Figures 2A-2C are three schematic diagrams illustrating the actuation of pushbuttons by a rotary relative movement between a door lock remote control device and an actuating device,
Figures 3A-3B are schematic perspective views illustrating a partly cut-through arrangement for manipulating a door lock remote control device, in two different states.
Figure 4 is schematic perspective view illustrating the external of the arrangement for manipulating a door lock remote control device in two different states.
Figure 5 is a schematic perspective view illustrating a partly cut-through arrangement for manipulating a door lock remote control device.
Figure 6 is a schematic view of a removable receptacle configured to accommodate a door lock remote control device within a surrounding casing.

### Detailed description

The invention shall be described by non-limiting examples with reference to the figures.

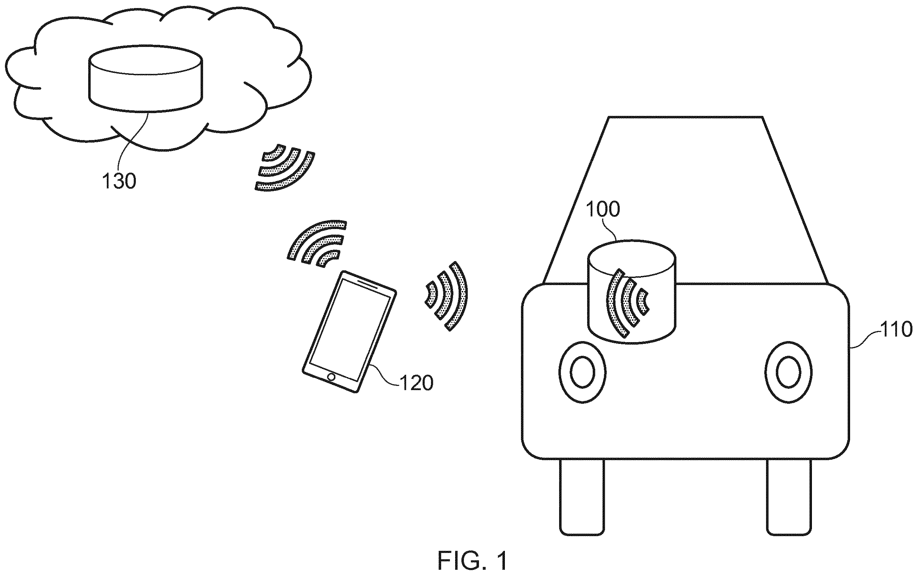

Figure 1 is a schematic perspective view of a system wherein an arrangement for manipulating a door lock remote control device is used.

A vehicle, for instance a passenger car, is shown at 110. The vehicle 110 is equipped with power door locks (not shown) that may be remotely operated by means of a door lock remote control device. The door lock remote control device has not been shown in figure 1, but may be recognized with reference numeral 200 in the remaining figures.

The arrangement according to the invention may alternatively be used in conjunction with a garage. In such a case, the door lock remote control device may control the locking and unlocking of a garage door.

The door lock remote control device may be in the form of a handle of a physical key which is used with an ignition lock switch in the vehicle to turn on the ignition and to start the car.

Traditionally, such a door lock remote control device is carried by the driver when he or she is outside the car. The door lock remote control device is typically equipped with at least one pushbutton, often two pushbuttons. The driver may unlock the vehicle's door locks by pressing the first pushbutton and lock the vehicle's door locks by pressing the second pushbutton. A third and fourth pushbutton may in some cases be provided, typically for opening the vehicle's luggage compartment or fuel tank cap. In some cases, the door lock remote control device has only one pushbutton, and locking/unlocking is provided by specified time sequences of operation of the one pushbutton.

The door lock remote control device is configured to transmit a radio signal that is encoded with a particular code when each of its buttons is pressed. A receiver in the vehicle is configured to respond to these particular codes, resulting in appropriate action in the car, i.e., locking and unlocking a door.

In the system shown in figure 1, the doors lock remote control device is kept within an arrangement 100, which is located in the vehicle compartment. The arrangement 100 is an arrangement for manipulating the door lock remote control device. In one aspect of the invention, it comprises at least one actuating device which, in use, operates at least one respective pushbutton in the door lock remote control device. In a typical example, the arrangement 100 for manipulating the door lock remote control device includes two actuating devices which, in use, operate two respective pushbuttons in the door lock remote control device.

The at least one actuating device is remotely operable by wireless communication means. This is illustrated by the wireless communication device 120 and the remote service 130. The wireless communication device 120 and the remote service 130 are configured to inter-communicate over a wireless network, for instance via mobile communication network, such as a GSM, 3G and/or 4G network, or via a local wireless network (WLAN), or both. The remote service 130 has been illustrated as a cloud service, in which case the provided service may be achieved by sharing of computer resources across several computing entities or data centers across the network. However, the remote service 130 may also be provided by a single, particular server computer operating in the wireless network.

The at least one actuating device in the arrangement 100 for manipulating the door lock remote control device may in one aspect be remotely operated directly from the wireless communication device 120, for instance by means of short-range wireless communication, such as Bluetooth or WLAN, or alternatively, by means of an optical (e.g., infrared) communication link.

In another aspect, the door lock remote control device may be operated by the wireless communication device 120 indirectly, over the wireless network, e.g., GSM, 3G, 4G and/or WLAN. In this aspect, the communication between the wireless communication device 120 and the door lock remote control device may be achieved by means of various network elements, for instance including the illustrated service 130.

According to one aspect of the invention, the at least one actuating device in the arrangement 100 is operable to interact with the at least one pushbutton in the door lock remote control device by a rotary relative movement between the door lock remote control device and the at least one actuating device. The rotary movement may be provided by an electrical motor encompassed in the arrangement, and an electronic motor controller, operatively controlled by at least a signal provided by the wireless communication means.

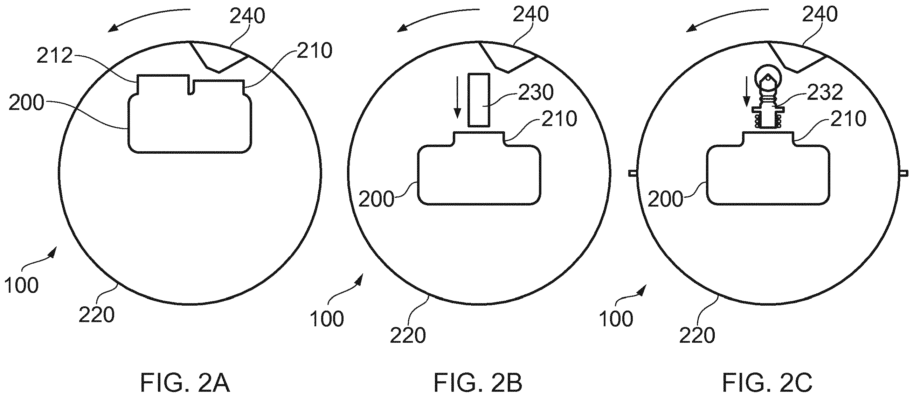

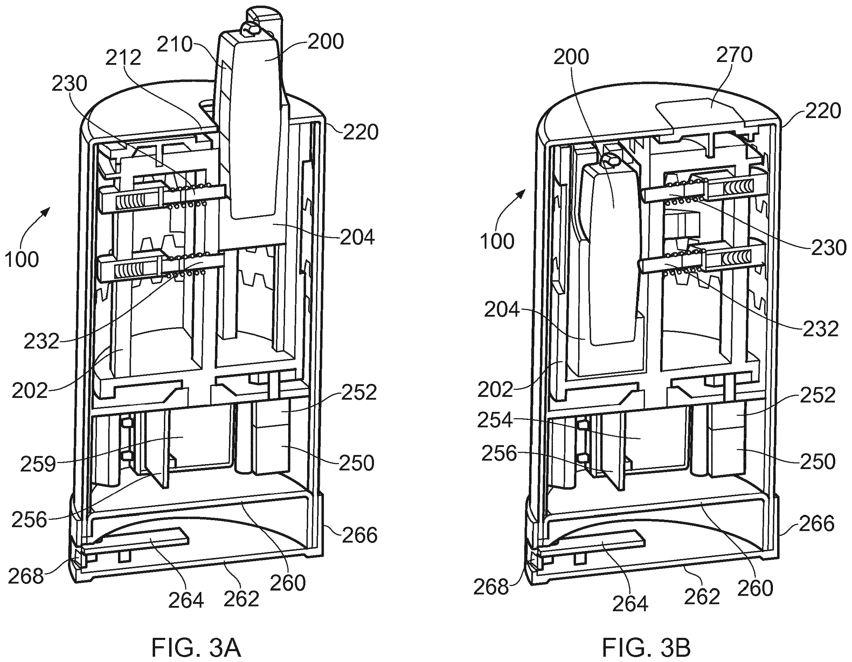

Further exemplary details of the operation of the actuating device(s) in the arrangement 100 will be explained below, in particular with reference to figures 2A-C and 3A-B.

As an alternative to the traditional approach, wherein a door of the vehicle 110 is locked and unlocked by operating at pushbutton in the door lock remote control device, a "keyless entry" function may be provided. In this case the vehicle door may be opened or locked by the operation of a button on the vehicle's door handle, provided that the remote control device is located within the communication range of the vehicle's door lock remote control receiver.

According to this alternative approach, the actuating device in the arrangement for manipulating a door lock remote control device will, in use, enable the propagation of wireless signals between the door lock remote control device and the door lock remote control receiver device. This propagation of wireless signals between the door lock remote control device and the door lock remote control receiver device may be achieved by a rotary relative movement between the door lock remote control device and the at least one actuating device.

In any of the above-mentioned approaches, the arrangement 100 may further comprise a lid to be opened and closed by the rotary movement between the receptacle and the surrounding casing. The opening of the lid may enable the propagation of radio signals betweeen the interior of the arrangement and the surroundings of the arrangement.

The lid may further provide an access port for the vehicle door lock remote control device to enter into or exit from the interior of the arrangement 100.

Figures 2A-2C are three schematic diagrams illustrating the actuation of pushbuttons by a rotary relative movement between a door lock remote control device 200 and an actuating device 240.

Each of the figures 2A, 2B and 2C illustrates schematically a cross-section of the arrangement 100 for manipulating a door lock remote control device, viewed in the direction of a rotational axis of the arrangement 100.

As already explained with reference to figure 1, the arrangement 100 includes at least one actuating device 240 which, in use, operates at least one respective pushbutton 210, 212 in the door lock remote control device 200.

The at least one actuating device 240 is operable to interact with the at least one pushbutton 210, 212 by a rotary relative movement between the door lock remote control device 200 and the at least one actuating device 240.

The arrangement 100 comprises a receptacle (not illustrated in figures 2A, 2B, 2C). which is configured to accommodate the door lock remote control device 200. The arrangement 100 also includes a casing 220 that surrounds the receptacle and the lock remote control device 200 accommodated in the receptacle.

The receptacle may be configured to keep the door lock remote control device 200 in a fixed position with respect to the receptacle, in particular during the relative rotational movement between the receptacle and the surrounding casing.

The casing 220 may have an inner surface, and the at least one actuating device may include at least one cam 240 provided on the inner surface of the casing 220. The or each cam may be provided in the form of a protrusion or projected area of the inner surface. The receptacle and the surrounding casing 220 may be configured to move with a rotational movement with respect to each other, in such a way that the cam 240 directly or indirectly pushes the pushbutton(s) 210, 212 in the door lock remote control device 200 at a predetermined relative rotational position between the receptacle and the surrounding casing 220.

In the example shown in figures 2A, the arrangement 100 comprises one actuating device 240 which, in use, operates two respective pushbuttons 210, 212 in the door lock remote control device 200. The operation of the respective pushbuttons 210, 212 is controlled by controlling the relative rotational movement between the receptacle and casing 220. The provision of such movement will be explained later, in particular with reference to figures 3A-3C below.

Figure 2B corresponds largely to the arrangement shown in figure 2A, but in figure 2B the door lock remote control device 200 has been located at a lower level than in the example of figure 2A, i.e., at a level close to a central rotary axis of the arrangement 100. Also, the door lock remote control device 200 has been illustrated with only one pushbutton 210, as opposed to the two pushbuttons shown in figure 2A. In order to operate the pushbutton 210, which has been located at a larger distance from the inner surface of the casing 220, the arrangement 100 in figure 2B includes at least one movable cam follower 230. One such cam follower has been illustrated in figure 2B. The cam follower is configured to transfer the movement provided by the cam 240 to the pushbutton 210 in the door lock remote control device 200. The cam follower 230 may in the simplest case be a rigid rod, which is guided by suitable guiding means (not shown) to obtain a linear, slidable movement.

Although only one pushbutton 210, one cam follower 230 and one cam 240 have been shown in figure 2B, it should be understood that two or more pushbuttons may be arranged in the door lock remote control device 200 along the axis of the arrangement 100, i.e., in intersections not shown on figure 2B. In this case, two or more cam followers 230 and cams 240 are arranged at corresponding positions, allowing the cams 240 and cam followers 230 to manipulate respective pushbuttons in the door lock remote control device 200.

Figure 2C corresponds to figure 2B, except that the cam follower 232 in figure 2C has been provided as a spring-loaded rod with an end stop in the form of a flange, which keeps a spring in place and which may also limit the range of linear travelling of the cam follower. Further, the upper end of the cam follower 232 has been provided with a free-running wheel or roller, which provides a more proper, less-friction interaction with the cam 240.

In any of the examples shown in figures 2A-2C, there are several possibilities for the relative movement between the receptacle and the surrounding casing. In one aspect, the receptacle may be stationary and the surrounding casing 220, which has one or more cams on its inner surface) may be rotary. In another aspect, the receptacle may be rotary and the surrounding casing 220 may be stationary. In still another aspect, the receptacle and the surrounding casing 220 may be counterrotating.

Figures 3A-3B are schematic perspective views illustrating a partly cut-through arrangement for manipulating a door lock remote control device, in two different states.

Figure 3A shows a state wherein a door lock remote control device 200 is to be inserted into or is being removed from the arrangement 100. Figure 3B shows a state wherein the door lock remote control device is fully inserted into and completely accommodated by the arrangement 100.

In both cases, i.e. in both figures, 3A and 3B, the arrangement 100 for manipulating a door lock remote control device 200 comprises two actuating devices, which, in use, operates two respective pushbuttons 210, 212 in the door lock remote control device 200. The "in use" mode corresponds to the state illustrated in figure 3B.

A receptacle 204 is configured to accommodate the door lock remote control device 200. The arrangement 100 also includes a surrounding casing 220, which may have a generally cylindrical shape, and which has an inner surface. The actuating device includes two cams 240 provided on the inner surface of the casing 200, at various positions along the rotational axis of the arrangement 100. The positions are selected so as to correspond with the positions of pusbuttons on the door lock remote control device 200 when the door lock remote control device 200 has been fully inserted in the arrangement 100, i.e., as shown in figure 3B.

The receptacle 204 is configured to keep the door lock remote control device 200 in a fixed position with respect to the receptacle 204 during the relative rotational movement between the receptacle 204 and the surrounding casing 220. Figure 3B shows a state wherein the receptacle 204 and the surrounding casing 220 may rotate with respect to each other.

The receptacle is also configured to follow the door lock remote control device 200 in an upper position, as shown in figure 3A, when the door lock remote control device is to be inserted into or removed from the arrangement 100. In the state shown in figure 3A, the receptacle 204 and the surrounding casing 220 are prevented from rotating with respect to each other.

Usually, as shown, the receptacle 204 is rotary in the arrangement 100, and the surrounding casing 220 is stationary. In alternative configurations, the receptacle 204 may be stationary and the surrounding casing 220 may be rotary. Still alternatively, the receptacle 204 and the surrounding casing 220 may be counterrotating.

Although not illustrated in the figures, the actuating device, or cam, may be provided on a rotating camshaft instead of on the inner surface of the surrounding casing 220. In this case the receptacle 204 and the surrounding casing 220 may both be stationary. The camshaft, inducing one or more cams arranged on the camshaft is arranged in such a way as to manipulate the pushbutton or pushbuttons of the door lock remote control device 200 when the camshaft rotates, when the door lock remote control device is kept in a stationary position within the arrangement 100 by the receptacle 204.

The actuating devices, or cams, 240, in particular their rotary positions, which influence their manipulation of the pushbuttons 210, 212, are remotely operable by wireless communication means. This may be achieved, e.g., in such a way as has been explained above with reference to figure 1.

The two actuating devices, or cams, 240, are operable to interact with the pushbuttons 210, 212 by a rotary relative movement between the door lock remote control device 100 and the actuating devices.

The receptacle 204, when fully inserted into the arrangement 100, as shown in figure 3B, and the surrounding casing 220, are configured to move with a rotational movement with respect to each other. During this movement, cams 240 pushes the respective pushbuttons in the door lock remote control device 200 at predetermined relative rotational positions between the receptacle 204 and the surrounding casing 220. The cams pushes the pushbuttons indirectly, via the movable cam followers 230, 232, which are configured to transfer the movement provided by the cams to the pushbuttons 210, 212 in the door lock remote control device.

The rotary movement between the receptacle 204 and the casing 220 is provided by an electrical motor 250, such as a DC motor, a synchrone motor, or a step motor, encompassed in the arrangement 100. The motor 250 may be mechanically connected to a gear unit 252 which adapts the rotational speed and torque of the motor 250 to a suitable rotational speed and torque of the relative rotary movement between the receptacle 204 and the casing 220. The arrangement 100 may also include an electronic motor controller which provides a control signal or power signal to the motor 250. The motor controller may be operatively controlled by at least a signal provided by the wireless communication means mentioned above, in particular with reference to figure 1.

The arrangement shown in figures 3A and 3B also includes a lid 270 that may be opened and closed by the rotary movement between the receptacle 204 and the surrounding casing 220. The opening and closing assembly of the lid 270 may be arranged in such a way that the lid is open when the receptacle 204 and the surrounding casing are positioned at the same angular posision with respect to the axis of the device 100, i.e., as shown in figure 3A. The opening and closing assembly of the lid 204 may also be arranged in such a way that the lid is closed when the receptacle 204 and the surrounding casing are positioned at different angular positions, for instance when they are positioned at opposite angular positions as shown in figure 3B.

In a useful aspect, opening of the lid enables propagation of radio signals betweeen the interior of the arrangement and the surroundings of the arrangement. This may be achieved by providing the casing 220, including its end faces, as a closed electrically conductive shield, i.e., as a Faraday cage. The casing 220 is in this case made of a metal or alloy such as aluminium or steel. When the lid is closed, it will form part of the Faraday cage and prevent propagation of radio signals, or at least attenuate such signals, between the interior and the exterior of the device 100. When the lid is opened, propagation of radio signals will be allowed and/or facilitated between the interior and the exterior of the device 100.

The lower end face of the arrangement 100 may, as illustrated in figures 3A and 3B, include an inner metal lid 260, The inner metal lid 260 may include the same material as the casing 220, e.g., aluminium or steel.

An outer, lower cover 266 may be provided at the bottom of the device 100. The lower cover 266 may advantageously be provided in a non-conducting material such as a plastic/resin material. An electronic wireless communiation circuit board 264 providing secondary wireless digital communication is provided in a compartment formed at the lower end of the arrangement 100. The lower lid cover ensures that the wireless communiation circuit board 264 is not captured by the Faraday cage, thus enabling secondary wireless communication even when the lid 270 is closed.

An upper face of the arrangement 100 may likewise include the same electrically conductive material as the casing 220, e.g., aluminium or steel. The lid 270 may also include the same electrically conductive material as the casing 220, e.g., aluminium or steel. The lid 270 may, electrically, form part of the upper face when the lid 270 is closed. The lid 270 may provide an opening in the upper face of the arrangement 100 when the lid 270 is open.

Advantageously, the lid 270 provides an access port for the door lock remote control device 200 to enter into or exit from the interior of the arrangement 100.

An electric power supply for powering power-consuming components may be included in the arrangement 100. The power supply may advantageously be provided as a battery 254, which may be rechargeable or disposable. Alternatively, the power supply may be provided as a line, cable or similar from an external power source, for instance in the vehicle.

In an alternative embodiment of the arrangement 100, the arrangement 100 for manipulating a door lock remote control device 200 comprises at least one actuating device which, in use, enables the propagation of wireless signals between the door lock remote control device 200 and a door lock remote control receiver device in the vehicle. The at least one actuating device is remotely operable by wireless communication means, and is operable to enable the propagation of wireless signals between the door lock remote control device 200 and the door lock remote control receiver device in the vehicle by a rotary relative movement between the door lock remote control device and the at least one actuating device.

In this alternative embodiment, the door lock remote control device does not necessarily include push buttons. Instead, the mere presence of the door lock remote control device within the radio range of the door lock remote control receiver device in the vehicle will enable unlocking of the vehicle lock, thus allowing the user to access the vehicle, e.g. when operating a switch at the vehicle door.

In this case, the opening of the lid 270, provided by the rotary relative movement between the door lock remote control device and the actuating device, results in that the door lock remote control device is found to be within the radio range of the door lock remote control receiver.

When the lid is closed, the lid and the remaining casing 200, including its end faces, form a Faraday cage which prevents radio signals from propagating effectively through the casing. This results in that the vehicle will remain locked.

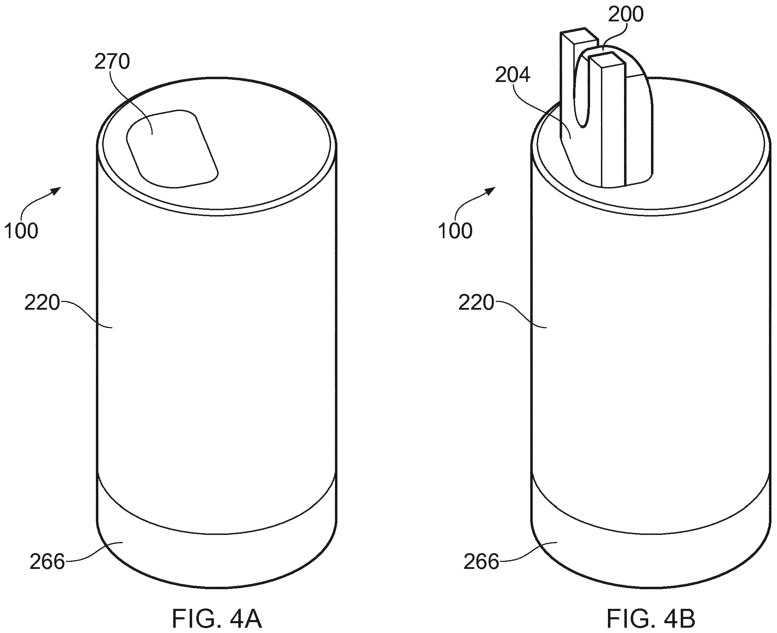

The remaining elements and features of the alternative embodiment of the arrangement 100 may correspond to what has been disclosed above with reference to figures 1, 2A-2C, 3A-3B, and below with reference to figure 4A-4B.

Figure 4 is schematic perspective view illustrating the external of the arrangement for manipulating a door lock remote control device in two different states.

In the first state, illustrated in figure 4A, the lid 270 is closed, forming a Faraday cage which prevents radio signals from propagating effectively through the casing 220.

In the second state, illustrated in figure 4B, the lid 270 is open, allowing radio signals to propagate through the casing 220 of the arrangement 100. Also, the open lid provides an access port for the lock remote control device 200. Part of the receptacle 204 has been shown in an elevated position, protruding through the opening that was closed by the lid 270 in figure 4A.

The lower, non-conducting cover of the arrangement 100 has also been shown at 266.

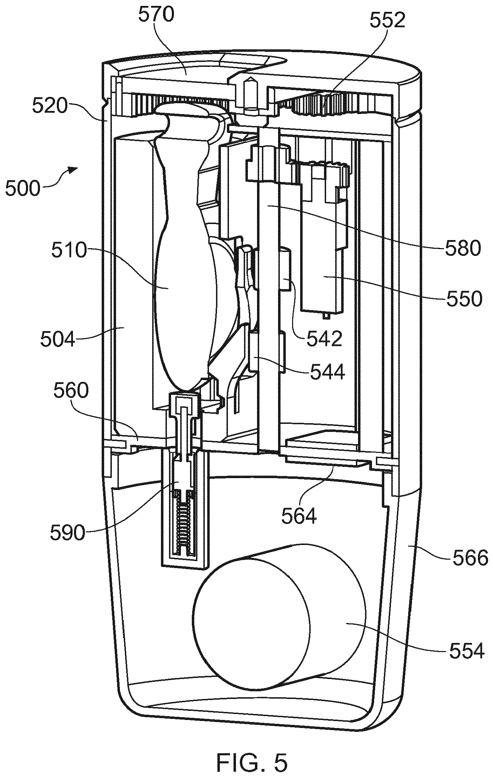

Figure 5 is a schematic perspective view illustrating a partly cut-through arrangement 500 for manipulating a door lock remote control device.

As is the case with the previously described embodiments of the arrangement for manipulating a door lock remote control device, the arrangement 500 shown in figure 5 also comprises at least one actuating device which, in use, operates at least one respective pushbutton in the door lock remote control device 510. Advantageously, the arrangement 500 includes two actuating devices which, in use, operate two respective pushbuttons in the door lock remote control device. Other numbers of actuating devices are possible, for instance one, three, four or more. The at least one actuating device is remotely operable by wireless communication means. The at least one actuating device is operable to interact with the at least one pushbutton by a rotary relative movement between the door lock remote control device and the at least one actuating device. The door lock remote control device may be a vehicle door lock remote control device.

However, in the embodiment of the arrangement 500 shown in figure 5, the rotary relative movement between the door lock remote control device and the at least one actuating device is not provided by a surrounding casing with at lease one cam on its inside. Instead, the rotary movement between the door lock remote control device 510 and the at least one actuating device is provided by at least one cam provided externally on a rotating camshaft.

In this case the receptacle 504 and the surrounding casing 520 are both stationary. The camshaft 580, inducing one or more cams 542, 544 arranged on the camshaft, is arranged in such a way as to manipulate, directly or indirectly, the pushbutton or pushbuttons of the door lock remote control device 510 when the camshaft rotates.

The arrangement in figure 5 has been shown in a state wherein the door lock remote control device 510 is fully inserted into and completely accommodated by the arrangement 100.

A receptacle 504 is configured to accommodate the door lock remote control device 510. The arrangement 500 also includes a surrounding casing 520, which may have a generally cylindrical shape.

The actuating device includes two cams 542, 544 provided on the exterior surface of the rotatable camshaft 580, at various positions along the camshaft 580. The positions may be selected so as to correspond with positions of levers or flaps, which may be part of the receptacle 504, and which serve to transfer a force between the rotating cam and a respective pusbutton on the door lock remote control device 510 held within the receptacle 504.

The camshaft 580 may be arranged centrally within the surrounding casing, for instance with its axis coincident with the cylindric surrounding casing 520, or with its axis offset and parallel to the axis of the cylindric surrounding casing 520.

The receptacle 504 is configured to keep the door lock remote control device 510 in a fixed position with respect to the surrounding casing 520 during the relative rotational movement between the receptacle 204 and the camshaft 542.

The receptacle 504 may also be configured to follow the door lock remote control device 510 to an upper position (not shown) when the door lock remote control device is to be inserted into or removed from the arrangement 500. In order to facilitate the insertion and removal of the door lock remote control device 510, the arrangement 500 may comprise a spring-loaded double-click mechanism 590 for retracting and rejecting/projecting the receptacle 504 from the surrounding casing 520. Such a double-clicking mechanism ensures that the receptacle 504 is engaged within the surrounding casing 520, i.e., retracted, at a first external depression by a user. At a second depression by the user, the double-click mechanism will reject the receptacle 504, or at least project it out of the surrounding casing 520.

The actuating devices, in this case the cams 542, 544, and in particular their rotary positions, which influence their manipulation of the pushbuttons, are remotely operable by wireless communication means. This may be achieved, e.g., in a corresponding way as has been explained above with reference to figure 1.

The rotary movement of the camshaft 580 may be provided by an electrical motor 550, such as a DC motor, a synchrone motor, or a step motor, encompassed in the arrangement 500. The motor 550 may be mechanically connected to a gear unit 552 which adapts the rotational speed and torque of the motor 550 to a suitable rotational speed and torque of the camshaft 580. The arrangement 500 may also include an electronic motor controller which provides a control signal or power signal to the motor 550. The motor controller may be operatively controlled by at least a signal provided by the wireless communication means mentioned above, in particular with reference to figure 1.

The arrangement shown in figure 5 also includes a lid 570 that may be opened and closed by the rotary movement of the motor 550 and the gear 552.

In a useful aspect, opening of the lid enables propagation of radio signals betweeen the interior of the arrangement and the surroundings of the arrangement. This may be achieved by providing the casing 520, including its end faces, as a closed electrically conductive shield, i.e., as a Faraday cage. The casing 520 is in this case made of a metal or alloy such as aluminium or steel. When the lid is closed, it will form part of the Faraday cage and prevent propagation of radio signals, or at least attenuate such signals, between the interior and the exterior of the device 500. When the lid is opened, propagation of radio signals will be allowed and/or facilitated between the interior and the exterior of the device 500.

The lower end face of the arrangement 500 may, as illustrated in figure 5, include an inner metal lid 560. The inner metal lid 560 may include the same material as the casing 520, e.g., aluminium or steel.

An outer, lower cover or cup 566 may be provided at the bottom of the device 500. The lower cover 566 may advantageously be provided in a non-conducting material such as a plastic/resin material. An electronic wireless communiation circuit board 564 providing secondary wireless digital communication is provided in a compartment formed at the lower end of the arrangement 500. The lower lid cover ensures that the wireless communiation circuit board 564 is not captured by the Faraday cage, thus enabling secondary wireless communication even when the lid 570 is closed.

An upper face of the arrangement 500 may likewise include the same electrically conductive material as the casing 520, e.g., aluminium or steel. The lid 570 may also include the same electrically conductive material as the casing 520, e.g., aluminium or steel. The lid 570 may, electrically, form part of the upper face when the lid 570 is closed. The lid 570 may provide an opening in the upper face of the arrangement 500 when the lid 570 is open.

Advantageously, the lid 570 provides an access port for the door lock remote control device 510 to enter into or exit from the interior of the arrangement 500.

An electric power supply for powering power-consuming components may be included in the arrangement 500. The power supply may advantageously be provided as a battery 554, which may be rechargeable or disposable. Alternatively, the power supply may be provided as a line, cable or similar from an external power source, for instance in the vehicle.

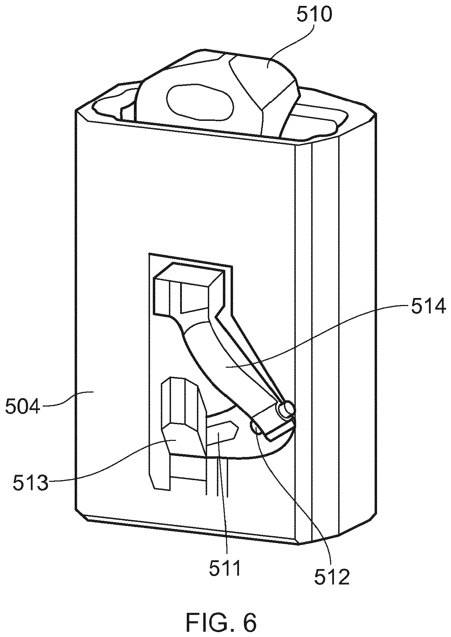

Figure 6 is a schematic view of a removable receptacle 504 configured to accommodate a door lock remote control device 510 within a surrounding casing.

The receptacle 504 includes a closure, such as a cradle or drawer, which is removable from the casing 500. The receptacle includes two protruding flaps 513, 514, which are configured to transfer a movement provided by respective cams on a rotatable camshaft to two corresponding pushbuttons 511, 512 in the door lock remote control device 510.

The receptacle 504 may have further features as illustrated and described above with reference to figure 5 and the corresponding detailed description.

The present invention may provide numerous advantages over the background art. For instance, the rotary operation principle of the invention makes it possible to use only one actuator, i.e., an electric motor, for providing several functions, including operating more than one pushbutton of the door remote control device. In the background art, several linear actuators were needed. Linear actuators are generally more expensive, may lead to a bulky design, and may result in less reliable and robust operation over time, as well as a more complex manufacturing process.

The rotary operation principle also facilitates the design of the arrangement according to the invention as a generally/substantially cylindrical unit. Such a design makes it easy to install the arrangement temporarily in a regular vehicle compartment, since such compartments usually include one or more cup or bottle holders that may be suitable for keeping the arrangement 100 within the vehicle compartment. Also, the cylindrical design allows robustness and ruggedness.

The former arrangements, based on a drawer and with linear actuators to operate pushbuttons, would usually need to be operated by two hands. The present invention may provide easy one-hand operation, including the insertion/removal of the door lock remote control device, by a user.

The invention has been disclosed by non-limiting examples with reference to the figures. The scope of the invention is not limited to the exemplary detailed description above. Rather, the scope has been defined by the appended claims.

## Claims

1. Arrangement (100, 500) for manipulating a door lock remote control device (200, 510) comprising at least one actuating device which, in use, operates at least one respective pushbutton (210, 212, 511, 512) in the door lock remote control device (200, 510) the at least one actuating device being remotely operable by wireless communication means (120, 130),
**characterized in that**
the at least one actuating device includes at least one cam (240, 542, 544) operable to interact with the at least one pushbutton (210, 212, 511, 512) by a rotary relative movement between the door lock remote control device (200, 510) and the at least one cam (240, 542, 544); and
the arrangement (100, 500) further comprising a lid (270, 570) to be opened and closed by the rotary relative movement.

2. Arrangement (100, 500) according to claim 1, wherein the door lock remote control device (200, 510) is a vehicle door lock remote control device.

3. Arrangement (100, 500) according to claim 1,
comprising two actuating devices which, in use, operate two respective pushbuttons in the door lock remote control device (200, 510).

4. Arrangement (100) according to one of the claims 1-3,
comprising a receptacle (204) configured to accommodate the door lock remote control device (200), and a surrounding casing (220), the casing (220) having an inner surface, the at least one cam (240) is provided on the inner surface, the receptacle (204) and the surrounding casing (220) being configured to move with a rotational movement with respect to each other, the at least one cam (240) directly or indirectly pushing the at least one pushbutton (210, 212) in the door lock remote control device (200) at a predetermined relative rotational position between the receptacle (204) and the surrounding casing (220).

5. Arrangement (100) according to claim 4,
further comprising at least one movable cam follower (230), configured to transfer the movement provided by the at least one cam (240) to the at least one pushbutton (210, 212) in the door lock remote control device (200).

6. Arrangement (100) according to claim 4 or 5,
wherein the receptacle (204) is configured to keep the door lock remote control device (200) in a fixed position with respect to the receptacle (204) during the relative rotational movement between the receptacle (204) and the surrounding casing (220).

7. Arrangement (100) according to one of the claims 4-6,
wherein the receptacle (204) is stationary and the surrounding casing (220) is rotary.

8. Arrangement (100) according to one of the claims 4-6,
wherein the receptacle (204) is rotary and the surrounding casing (220) is stationary.

9. Arrangement (500) according to one of the claims 1-3,
wherein the at least one cam (542, 544) is provided on a rotating camshaft (580).

10. Arrangement (500) according to claim 9,
comprising a receptacle (504) configured to accommodate the door lock remote control device (510), and a surrounding casing (520),
the door lock remote control device (510) being held in a fixed position within the surrounding casing (520), the at least one cam (542, 544) on the camshaft (580) directly or indirectly pushing the at least one pushbutton (511, 512) in the door lock remote control device (500) at a predetermined relative rotational position between the receptacle (504) and the camshaft (580).

11. Arrangement (500) according to claim 9 or 10,
wherein the receptacle (504) includes a removable closure which includes at least one protruding flap (513, 514), configured to transfer the movement provided by the at least one cam (542, 544) to the at least one pushbutton (511, 512) in the door lock remote control device (510).

12. Arrangement (500) according to claim 11,
further comprising a double-click mechanism (590) for retracting and projecting the receptacle (504) from the surrounding casing (520).

13. Arrangement (100, 500) according to one of the claims 1-12,
wherein the rotary movement is provided by an electrical motor (250, 550) encompassed in the arrangement (100, 500), and an electronic motor controller, operatively controlled by at least a signal provided by the wireless communication means (120, 130).

14. Arrangement according to one of the claims 1 - 13, wherein opening of the lid (270, 570) enables propagation of radio signals between the interior of the arrangement (100, 500) and the surroundings of the arrangement (100, 500).

## Patentansprüche

1. Anordnung (100, 500) zur Manipulation einer Fernbedienungsvorrichtung (200, 510) eines Türschlosses, die mindestens eine Betätigungsvorrichtung umfasst, die bei Verwendung mindestens einen entsprechenden Druckknopf (210, 212, 511, 512) in der Fernbedienungsvorrichtung (200, 510) des Türschlosses betätigt, wobei die mindestens eine Betätigungsvorrichtung durch ein Mittel (120, 130) zur drahtlosen Kommunikation fernbedienbar ist,
**dadurch gekennzeichnet, dass**
die mindestens eine Betätigungsvorrichtung mindestens einen Nocken (240, 542, 544) beinhaltet, der betreibbar ist, um mit dem mindestens einen Druckknopf (210, 212, 511, 512) durch eine relative Drehbewegung zwischen der Fernbedienungsvorrichtung (200, 510) des Türschlosses und dem mindestens einen Nocken (240, 542, 544) zusammenzuwirken; und die Anordnung (100, 500) ferner einen Deckel (270, 570) umfasst, der durch die relative Drehbewegung geöffnet und geschlossen werden soll.

2. Anordnung (100, 500) nach Anspruch 1,
wobei die Fernbedienungsvorrichtung (200, 510) des Türschlosses, eine Fernbedienungsvorrichtung eines Kraftfahrzeugtürschlosses ist.

3. Anordnung (100, 500) nach Anspruch 1,
die zwei Betätigungsvorrichtungen umfasst, die bei Verwendung zwei entsprechende Druckknöpfe in der Fernbedienungsvorrichtung (200, 510) des Türschlosses betätigen.

4. Anordnung (100) nach einem der Ansprüche 1-3,
die eine Aufnahme (204), die dazu ausgebildet ist, die Fernbedienungsvorrichtung (200) des Türschlosses aufzunehmen, und ein umgebendes Gehäuse (220) umfasst, wobei das Gehäuse (220) eine Innenfläche aufweist, der mindestens eine Nocken (240) an der Innenfläche bereitgestellt ist, die Aufnahme (204) und das umgebende Gehäuse (220) dazu ausgelegt sind, sich mit einer Drehbewegung in Bezug zueinander zu bewegen, der mindestens eine Nocken (240) in einer vorbestimmten relativen Drehposition zwischen der Aufnahme (204) und dem umgebenden Gehäuse (220) direkt oder indirekt den mindestens einen Druckknopf (210, 212) in der Fernbedienungsvorrichtung (200) des Türschlosses drückt.

5. Anordnung (100) nach Anspruch 4,
die ferner mindestens einen beweglichen Nockenstößel (230) umfasst, der dazu ausgelegt ist, die Bewegung zu übertragen, die von dem mindestens einen Nocken (240) auf den mindestens einen Druckknopf (210, 212) in der Fernbedienungsvorrichtung (200) des Türschlosses bereitgestellt wird.

6. Anordnung (100) nach Anspruch 4 oder 5,
wobei die Aufnahme (204) dazu ausgelegt ist, während der relativen Drehbewegung zwischen der Aufnahme (204) und dem umgebenden Gehäuse (220) die Fernbedienungsvorrichtung (200) des Türschlosses in einer festen Position in Bezug auf die Aufnahme (204) zu halten.

7. Anordnung (100) nach einem der Ansprüche 4-6,
wobei die Aufnahme (204) feststehend ist und das umgebende Gehäuse (220) drehend ist.

8. Anordnung (100) nach einem der Ansprüche 4-6,
wobei die Aufnahme (204) drehend ist und das umgebende Gehäuse (220) feststehend ist.

9. Anordnung (500) nach einem der Ansprüche 1-3,
wobei der mindestens eine Nocken (542, 544) an einer drehenden Nockenwelle (580) bereitgestellt ist.

10. Anordnung (500) nach Anspruch 9,
die eine Aufnahme (504), die dazu ausgelegt ist, die Fernbedienungsvorrichtung (510) des Türschlosses aufzunehmen, und ein umgebendes Gehäuse (520) umfasst,
wobei die Fernbedienungsvorrichtung (510) des Türschlosses in einer festen Position innerhalb des umgebenden Gehäuses (520) gehalten wird, der mindestens eine Nocken (542, 544) auf der Nockenwelle (580) in einer vorbestimmten relativen Drehposition zwischen der Aufnahme (504) und der Nockenwelle (580) direkt oder indirekt den mindestens einen Druckknopf (511, 512) in der Fernbedienungsvorrichtung (500) des Türschlosses drückt.

11. Anordnung (500) nach Anspruch 9 oder 10,
wobei die Aufnahme (504) einen abnehmbaren Verschluss beinhaltet, der mindestens eine hervorstehende Klappe (513, 514) beinhaltet, die dazu ausgelegt ist, die Bewegung, die von dem mindestens einen Nocken (542, 544) bereitgestellt wird, auf den mindestens einen Druckknopf (511, 512) in der Fernbedienungsvorrichtung (510) des Türschlosses zu übertragen.

12. Anordnung (500) nach Anspruch 11,
die ferner einen Doppelklickmechanismus (590) zum Zurückziehen und Vorschieben der Aufnahme (504) aus dem umgebenden Gehäuse (520) umfasst.

13. Anordnung (100, 500) nach einem der Ansprüche 1-12,
wobei die Drehbewegung durch einen Elektromotor (250, 550), der in der Anordnung (100, 500) eingeschlossen ist, und eine Elektromotorsteuerung bereitgestellt wird, die durch mindestens ein Signal, das von dem Mittel (120, 130) zu drahtlosen Kommunikation bereitgestellt wird, funktionell gesteuert wird.

14. Anordnung nach einem der Ansprüche 1-13,
wobei ein Öffnen des Deckels (270, 570) die Verbreitung von Funksignalen zwischen dem Inneren der Anordnung (100, 500) und der Umgebung der Anordnung (100, 500) ermöglicht.

## Revendications

1. Agencement (100, 500) pour manipuler un dispositif de télécommande de verrou de porte (200, 510) comprenant au moins un dispositif d'actionnement qui, en utilisation, fait fonctionner au moins un bouton-poussoir (210, 212, 511, 512) respectif dans le dispositif de télécommande de verrou de porte (200, 510), l'au moins un dispositif d'actionnement pouvant être mis en fonctionnement à distance par des moyens de communication sans fil (120, 130),
**caractérisé en ce que**
l'au moins un dispositif d'actionnement comporte au moins une came (240, 542, 544) pouvant fonctionner pour interagir avec l'au moins un bouton-poussoir (210, 212, 511, 512) par un mouvement relatif rotatif entre le dispositif de télécommande de verrou de porte (200, 510) et l'au moins une came (240, 542, 544) ; et
l'agencement (100, 500) comprenant en outre un couvercle (270, 570) à ouvrir et fermer par le mouvement relatif rotatif.

2. Agencement (100, 500) selon la revendication 1, dans lequel le dispositif de télécommande de verrou de porte (200, 510) est un dispositif de télécommande de verrou de porte de véhicule.

3. Agencement (100, 500) selon la revendication 1,
comprenant deux dispositifs d'actionnement qui, en utilisation, font fonctionner deux boutons-poussoirs respectifs dans le dispositif de télécommande de verrou de porte (200, 510).

4. Agencement (100) selon l'une des revendications 1 à 3,
comprenant un réceptacle (204) configuré pour loger le dispositif de télécommande de verrou de porte (200), et un boîtier enveloppant (220), le boîtier (220) ayant une surface intérieure, l'au moins une came (240) est prévue sur la surface intérieure, le réceptacle (204) et le boîtier enveloppant (220) étant configurés pour se déplacer avec un mouvement rotationnel l'un par rapport à l'autre, l'au moins une came (240) poussant directement ou indirectement l'au moins un bouton-poussoir (210, 212) dans le dispositif de télécommande de verrou de porte (200) à une position rotationnelle relative prédéterminée entre le réceptacle (204) et le boîtier enveloppant (220).

5. Agencement (100) selon la revendication 4,
comprenant en outre au moins un suiveur de came mobile (230), configuré pour transférer le mouvement fourni par l'au moins une came (240) à l'au moins un bouton-poussoir (210, 212) dans le dispositif de télécommande de verrou de porte (200).

6. Agencement (100) selon la revendication 4 ou 5,
dans lequel le réceptacle (204) est configuré pour maintenir le dispositif de télécommande de verrou de porte (200) à une position fixe par rapport au réceptacle (200) au cours du mouvement rotationnel relatif entre le réceptacle (204) et le boîtier enveloppant (220).

7. Agencement (100) selon l'une des revendications 4 à 6,
dans lequel le réceptacle (200) est immobile et le boîtier enveloppant (220) est rotatif.

8. Agencement (100) selon l'une des revendications 4 à 6,
dans lequel le réceptacle (204) est rotatif et le boîtier enveloppant (220) est immobile.

9. Agencement (500) selon l'une des revendications 1 à 3,
dans lequel l'au moins une came (542, 544) est prévue sur un arbre à cames rotatif (580).

10. Agencement (500) selon la revendication 9,
comprenant un réceptacle (504) configuré pour loger le dispositif de télécommande de verrou de porte (510), et un boîtier enveloppant (520),
le dispositif de télécommande de verrou de porte (510) étant maintenu à une position fixe à l'intérieur du boîtier enveloppant (520), l'au moins une came (542, 544) sur l'arbre à cames (580) poussant directement ou indirectement l'au moins un bouton-poussoir (511, 512) dans le dispositif de télécommande de verrou de porte (500) à une position rotationnelle relative prédéterminée entre le réceptacle (504) et l'arbre à cames (580).

11. Agencement (500) selon la revendication 9 ou 10,
dans lequel le réceptacle (500) comporte une fermeture amovible qui comporte au moins un volet saillant (513, 514), configuré pour transférer le mouvement fourni par l'au moins une came (542, 544) à l'au moins un bouton-poussoir (511, 512) dans le dispositif de télécommande de verrou de porte (510).

12. Agencement (500) selon la revendication 11,
comprenant en outre un mécanisme à double encliquetage (590) pour rétracter et projeter le réceptacle (504) depuis le boîtier enveloppant (520).

13. Agencement (100, 500) selon l'une des revendications 1 à 12,
dans lequel le mouvement rotatif est fourni par un moteur électrique (250, 550) englobé dans l'agencement (100, 500), et un dispositif de commande de moteur électronique, commandé opérationnellement par au moins un signal fourni par les moyens de communication sans fil (120, 130).

14. Agencement selon l'une des revendications 1 à 13, dans lequel l'ouverture du couvercle (270, 570) permet une propagation de signaux radio entre l'intérieur de l'agencement (100, 500) et les environs de l'agencement (100, 500).
